# EUROPÄISCHE PATENTSCHRIFT

(11) **EP 2 604 404 B1**
(45) Veröffentlichungstag und Bekanntmachung des Hinweises auf die Patenterteilung: **21.06.2017**
(21) Anmeldenummer: 12196501.6
(22) Anmeldetag: 11.12.2012
(51) Int. Cl.: B29B 17/02, B03B 5/02, B08B 3/10, B08B 3/04, B08B 3/08, B29K 105/06

(54) **Vorrichtung und Verfahren zur Reinigung von Kunststoffschnitzeln**
Method and device for cleaning plastic chips
Dispositif et procédé de nettoyage de petits morceaux de plastique

(30) Priorität: 12.12.2011 DE 102011056276
(43) Veröffentlichungstag der Anmeldung: 19.06.2013
(73) Patentinhaber: Krones AG, 93073 Neutraubling (DE)
(72) Erfinder: Kirchhoff, Timm, 93073 Neutraubling (DE); Rossen, Frank, 93073 Neutraubling (DE); Seul, Matthias, 93073 Neutraubling (DE)
(74) Vertreter: Nordmeyer, Philipp Werner

(56) Entgegenhaltungen:
- EP-A1- 0 805 011
- EP-A2- 2 052 791
- DE-A1- 4 018 780
- DE-B- 1 032 719
- DE-C1- 4 337 206
- FR-A- 350 813
- JP-A- 56 118 817
- US-A1- 2010 243 004

## Beschreibung

### Technisches Gebiet

Die vorliegende Erfindung betrifft eine Vorrichtung sowie ein Verfahren zur Reinigung von Kunststoffschnitzeln, insbesondere zur Reinigung von fremdstoffbehafteten Kunststoffflakes, welche beim Recycling von Kunststoffen, bevorzugt beim Recycling von Kunststoffflaschen und PET-Verpackungen, anfallen.

### Stand der Technik

Im Bereich des Recyclings bzw. der Wiederverwendung von Kunststoffen, beispielsweise von Kunststoffflaschen für die Getränkeabfüllung und anderen Kunststoffverpackungen für die Lebensmittelindustrie, ist es bekannt, die eingesammelten Kunststoffe mechanisch in einer entsprechenden Schnitzel- oder Schredderanlage so zu zerkleinern, dass nach dieser mechanischen Zerkleinerung Kunststoffschnitzel, die auch als Kunststoffflakes bezeichnet werden, vorliegen. Diese Kunststoffschnitzel können zur erneuten Herstellung von Gegenständen aus Kunststoff verwendet werden und entsprechend recycelt werden.

Lange Zeit war man davon ausgegangen, dass das bei der Rücknahme von Kunststoffverpackungen aus dem Lebensmittelbereich eingesammelte Kunststoffmaterial aufgrund der bei der Verwendung auftretenden Fremdstoffbelastung nicht mehr für die Verwendung im Lebensmittelbereich geeignet sei. Insbesondere war man auch davon ausgegangen, dass sich das PET-Material, welches von eingesammelten PET-Verpackungen stammt, nach einem Recyclingprozess nicht mehr zur erneuten Herstellung von Kunststoffverpackungen für Lebensmittel eigne, sondern man war davon ausgegangen, dass hier eine Wiederverwendung nur auf einer niedrigeren Produktqualitätsstufe, also nicht mehr im Lebensmittelbereich, möglich sei.

In der Zwischenzeit sind jedoch Recyclingverfahren vorgeschlagen worden, gemäß welchen die Verschmutzungen und Kontaminationen von den jeweiligen Kunststoffoberflächen der eingesammelten Kunststoffverpackungen soweit entfernt werden können, dass eine Wiederverwendung des Kunststoffmaterials auch zur Herstellung von neuen Kunststoffverpackungen für die Lebensmittelindustrie möglich ist. Besonders kann das entsprechende Kunststoffmaterial auch zur Herstellung von Kunststoffflaschen zur Getränkeabfüllung verwendet werden. Entsprechend ist dieses recycelte Kunststoffmaterial erneut zur Verwendung im Lebensmittelbereich geeignet.

In diesem Zusammenhang beschreibt beispielsweise die DE 10 2005 013 701 A1 ein Verfahren, mittels welchem die Oberflächen und die oberflächennahen Bereiche von eingesammeltem PET-Material so gut dekontaminiert werden können, dass eine erneute Verwendung dieses Kunststoffmaterials im Lebensmittelbereich möglich ist. In diesem genannten Verfahren kommt der Reinigung der Kunststoffschnitzel bzw. der Kunststoffflakes, bevor sie dem in der DE 10 2005 013 701 A1 beschriebenen Verfahren unterzogen werden, eine wesentliche Bedeutung zu, da die zunächst fremdstoffbehafteten Kunststoffschnitzel an ihren Oberflächen von den Fremdstoffen, Verschmutzungen und Kontaminationen befreit werden müssen.

An Fremdstoffen, die sich an den Oberflächen des Kunststoffmaterials anlagern, kommen hier beispielsweise Produktreste aus den jeweiligen Kunststoffflaschen sowie Etikettenreste und Kleberreste in Betracht. Es wurde weiterhin beobachtet, dass beispielsweise Kunststoffflaschen nach deren Erstnutzung häufig durch die Befüllung mit anderen Flüssigkeiten, welche dem ursprünglichen Produkt nicht gleichen, kontaminiert werden. Darüber hinaus unterliegen beispielsweise Kunststoffflaschen der üblichen Verschmutzung durch unsachgemäße Lagerung und tragen dann auf ihren Oberflächen beispielsweise Reste von Sand oder Erde.

Diese Verschmutzungen gilt es vor und/oder nach dem Zerkleinern oder Schreddern von den Oberflächen des Kunststoffmaterials zu entfernen, um ein möglichst reines Kunststoffmaterial zur Wiederverwendung bereit zu stellen und beispielsweise dem in der oben genannten DE 10 2005 013 701 A1 beschriebenen Verfahren zuzuführen.

Die Reinigung der Kunststoffschnitzel wird dabei maßgeblich von den folgenden vier Faktoren beeinflusst: Temperatur des Reinigungsprozesses, mechanische Behandlung (Abrasion und Friktion bzw. Reibung), Konzentration einer Reinigungsflüssigkeit (Lauge, Säure oder einer anderen Flüssigkeit mit Reinigungswirkung), sowie Verweilzeit in der jeweiligen Reinigungsvorrichtung.

Diese vier Parameter beeinflussen sich gegenseitig, so dass für eine gleichbleibende Reinigungsleistung bei einer Erhöhung der Temperatur beispielsweise die Verweildauer reduziert werden kann, bei einer Verringerung der Laugenkonzentration beispielsweise der Anteil an mechanischer Reinigung erhöht werden muss, etc. Die mechanische Komponente führt zur Friktion bzw. Reibung entweder der Kunststoffschnitzel untereinander, und/oder zur Friktion bzw. Reibung der Kunststoffschnitzel an den Oberflächen der jeweiligen Vorrichtung, also besonders auch an den Oberflächen einer Rühreinrichtung und/oder den Oberflächen eines Behälters.

Eine gute Reinigung der Kunststoffschnitzel, beispielsweise auch von den schwierig zu entfernenden synthetisch hergestellten Klebstoffen, besonders den sogenannten Hotmelt-Klebestoffen, oder den aus natürlichen Rohstoffen hergestellten Leimen, welche jeweils zum Aufbringen der Etiketten auf die Außenseite der Kunststoffverpackungen, beispielsweise der PET-Flaschen verwendet werden, kann entsprechend nur über eine optimale Einstellung dieser genannten vier Parameter erreicht werden.

Die DE 43 37 206 C1 offenbart in diesem Zusammenhang ein Verfahren zur Reinigung von fremdstoffbehafteten Kunststoffschnitzeln, wobei hier die Verweildauer der Kunststoffschnitzel innerhalb der Trenn- und Wascheinrichtung durch eine Aufteilung des entsprechenden Flüssigkeitsbades in zumindest zwei voneinander separate Teilbäder verlängert wird.

In der WO 00/76681 A1 wird eine Vorrichtung zum Waschen von Plastikmaterial angegeben, wobei hier ebenfalls die Verweildauer der jeweiligen Chargen an Plastikmaterial innerhalb eines Rührbehälters gesteuert wird.

Die EP 2 052 791 A2 schlägt eine Vorrichtung zur Reinigung von Schüttgut vor, in welcher beispielsweise Kunststoffflakes, welche bei Recyclingprozessen von PET-Flaschen anfallen, in einem Nassreinigungsprozess gereinigt werden. Zusätzlich wird eine mechanische Reinigung durch Reibung zwischen den Flakes sowie Reibung der Flakes an den entsprechenden Gehäuseteilen erreicht.

Aus der JP 56-118817 A ist eine Waschvorrichtung zum Waschen für geschäumte Kunststoffteile bekannt. Die EP 0 805 011 A1 offenbart ein Verfahren und eine Vorrichtung zur Wiedergewinnung von Magnetpulver und dem Trägerfilm aus magnetischem Filmabfall. Die DE 40 18 780 A1 beschreibt eine Misch-, Dispergier- und Emulgiervorrichtung zur Verwendung in flüssigen und pastösen Medien.

### Darstellung der Erfindung

Ausgehend von diesem Stand der Technik ist es Aufgabe der vorliegenden Erfindung, die Reinigungswirkung einer Vorrichtung zur Reinigung von Kunststoffschnitzeln noch weiter zu verbessern.

Diese Aufgabe wird gelöst durch eine Vorrichtung mit den Merkmalen des Anspruchs 1. Vorteilhafte Ausgestaltungen sind in den Unteransprüchen angegeben.

Entsprechend umfasst die Vorrichtung zur Reinigung von Kunststoffschnitzeln einen Behälter zur Aufnahme der Kunststoffschnitzel und eine in dem Behälter um eine Drehachse drehbar angeordnete Rühreinrichtung zum Rühren der Kunststoffschnitzel, wobei die Rühreinrichtung einen sich entlang der Drehachse erstreckenden Drehkörper aufweist, der aus Drehkörperwänden aufgebaut ist, wobei der Drehkörper senkrecht zur Drehachse einen Querschnitt aufweist, der Abstand zwischen der Umfangslinie des Querschnitts des Drehkörpers und der Drehachse entlang der Umfangslinie des Querschnitts des Drehkörpers variiert, der Behälter senkrecht zur Drehachse einen Querschnitt aufweist und der Abstand zwischen der Umfangslinie des Querschnitts des Behälters und der Drehachse entlang der Umfangslinie des Querschnitts des Behälters variiert. Erfindungsgemäß weist der Drehkörper demnach senkrecht zur Drehachse einen Querschnitt auf, dessen Abstand von der Drehachse variiert. Ferner weist der Behälter senkrecht zur Drehachse einen Querschnitt auf, dessen Abstand von der Drehachse variiert.

Dadurch, dass der Drehkörper einen Querschnitt aufweist, dessen Abstand senkrecht zur Drehachse variiert, wird auf die Kunststoffschnitzel bei einer Drehung des Drehkörpers um die Drehachse relativ zum Behälter der in einem bestimmten Segment des Behälters vorliegende Abstand zwischen dem Drehkörper und der Behälterwand ständig verändert, da sich der Radius des Drehkörpers an einer festen Position des Behälters ständig ändert. Entsprechend werden die sich zwischen dem Drehkörper und der Behälterwand befindlichen Kunststoffschnitzel unterschiedlichen Druck- und Entspannungsbereichen ausgesetzt, welche durch die Abstandsvariation hervorgerufen werden, wobei sich deren räumliche Anordnung im Behälter entsprechend im Zeitverlauf ändert. In einer bevorzugten Ausbildung können sich diese Druck- und Entspannungsbereiche periodisch ändern. Diese über den Zeitverlauf veränderlichen Druck- und Entspannungsbereiche erhöhen die mechanische Reinigungswirkung, da durch die entsprechende Kompression die Reibung zwischen den Kunststoffschnitzeln sowie zwischen den Kunststoffschnitzeln und den entsprechenden Oberflächen der Vorrichtung erhöht wird und durch die Variation des Druckes die Reibung in unterschiedlicher Weise auf einen individuellen Kunststoffschnitzel wirken kann. Insbesondere liegt aufgrund der durch die Druckvariation variierenden Normalkraft der Übergang von Haftreibung zu Gleitreibung in unterschiedlichen Bereichen, so dass Kunststoffschnitzel mit unterschiedlichsten Verschmutzungen abrasiv gereinigt werden können. Entsprechend kommt es hier zu einer verbesserten mechanischen Reinigungswirkung der Kunststoffschnitzel. Die Reinigungswirkung wird dabei vorwiegend durch die Reibung der Kunststoffschnitzel untereinander hervorgerufen. Die Reibung an der Behälterwand und an dem Drehkörper ist dabei allerdings auch zu berücksichtigen.

Unter einem variierenden Abstand des Querschnitts von der Drehachse wird hier verstanden, dass der Abstand zwischen der Umfangslinie des Querschnitts und der Drehachse entlang der Umfangslinie des Querschnitts variiert. Bei einem konzentrisch zur Drehachse angeordneten Kreis wäre dies nicht der Fall - hier wäre der Abstand zwischen der Umfangslinie des Querschnitts und der Drehachse konstant, nämlich der Radius des Kreises. Der Querschnitt mit dem variierenden Abstand hingegen ist so ausgebildet, dass zumindest an einem Punkt ein anderer Abstand vorliegt. Typische Beispiele eines solchen Querschnitts sind eckige, polygonale, exzentrische, nockenförmige oder ovale Querschnitte, bei welchen die Abstandsvariation zwischen der Drehachse und dem Querschnitt, insbesondere der Umfangslinie des Querschnitts, evident sind.

Die Vorrichtung kann sowohl in einem nassen Prozess, beispielsweise unter Zusetzung einer Reinigungsflüssigkeit in Form von Lauge, als auch in einem trockenen Prozess betrieben werden.

In der trockenen Betriebsweise dient allein die entstehende Reibung zwischen den Kunststoffschnitzeln der Abreinigung der Kunststoffschnitzel, wobei diese Abreinigung durch den beim Prozess entstehenden Abrieb, welcher dann als Abrasionsmittel wirkt, weiter begünstigt wird. Selbstverständlich muss der entsprechende Abrieb nach der Durchführung des Prozesses von den Kunststoffschnitzeln wieder abgetrennt werden, bevor diese einer nachfolgenden Prozessstufe zugeführt werden können.

In einer nassen Betriebsweise kann entsprechend gegenüber den vorbekannten Reinigungsvorrichtungen der Einsatz der drei anderen Komponenten, also Wärme, Zeit und Laugenkonzentration, verringert werden, da die mechanische Komponente in der vorgeschlagenen Vorrichtung sehr stark vertreten ist. Auf diese Weise lässt sich der Reinigungsprozess effizienter und ökologischer betreiben, da insbesondere der Einsatz von Reinigungsflüssigkeit und Wärme gegenüber den vorbekannten Lösungen reduziert werden kann.

Bezüglich der Reibung wird hier definiert, dass unter Reibung die Hemmung einer Bewegung verstanden wird. Man unterscheidet zwischen äußerer Reibung, welche zwischen den sich berührenden Grenzflächen von Festkörpern auftritt, und innerer Reibung, welche bei der Verformung von Fluiden und Festkörpern auftritt.

Äußere Reibung wird auch als Festkörperreibung bezeichnet, weil sie zwischen den Kontaktflächen von sich berührenden Festkörpern auftritt. Sie wird unterteilt in Kraftreibung, Gleitreibung, Rollreibung, Bohrreibung und Seilreibung. Diese Reibungsformen treten nicht immer strikt voneinander getrennt auf, denn mehrere Reibungsformen können zugleich oder abwechselnd auftreten; zum Beispiel ist der Stick-Slip-Effekt ein periodischer Übergang zwischen Haft- und Gleitreibung.

In dem der vorliegenden Vorrichtung wird hier hauptsächlich die Haft- und die Gleitreibung zwischen den einzelnen Kunststoffschnitzeln sowie zwischen den Kunststoffschnitzeln und den jeweiligen Oberflächen der Vorrichtung betrachtet. Die Haftreibung entsteht durch mechanische Verklammerung zwischen den Kontaktflächen und molekulare Anziehungskräfte (Adhäsion). Gleitreibung tritt an den Kontaktflächen zwischen Körpern auf, die sich geradlinig zueinander bewegen.

Festzuhalten ist hier unter anderem auch, dass die auftretenden Reibungskräfte zwischen den einzelnen Kunststoffschnitzeln in der Vorrichtung aufgrund der Drehung des Drehkörpers und dem sich damit ständig veränderndem Abstand zwischen Behälterwand und Drehkörper deutlich höher sind, als im Falle des aus dem Stand der Technik bekannten gleichförmigen Abstands zwischen einem Rührer und einer Behälterwand, so wie beispielsweise bei der Verwendung eines zylindrischen Profils eines Rührers. Durch den sich ständig verändernden Abstand zwischen Behälter(wand) und Drehkörper(wand) in einem beliebigen Segment des Behälters werden zwischen den Kunststoffschnitzeln ständig Übergänge zwischen Haftreibung und Gleitreibung provoziert, die aufgrund der sich ständig ändernden Normalkraft zwischen den Kunststoffschnitzeln zu einer besonders gute Reinigungswirkung führen.

Durch die starke Reibung der einzelnen Kunststoffschnitzel wird erreicht, dass die anhaftenden Verschmutzungen, Etiketten, Klebstoffreste sowie andere Kontaminierungen von den jeweiligen Kunststoffoberflächen entfernt werden. Je nach Prozesssteuerung wird auch ein Teil der Oberfläche der jeweiligen Kunststoffschnitzel abgetragen, so dass auch oberflächennahe Kontaminierungen, welche in das Kunststoffmaterial eingedrungen sind, abrasiv entfernt werden.

In einer vorteilhaften Ausbildung weist der der Querschnitt des Drehkörpers mindestens eine Ecke, bevorzugt zwei, drei, vier, fünf, sechs, sieben oder mehr Ecken, auf. Weiter bevorzugt wird hier vorgesehen, dass der Querschnitt des Drehkörpers ein Polygon umfasst, bevorzugt ein ebenes, regelmäßiges, einfaches Polygon, besonders bevorzugt ein drei, vier, fünf, sechs, sieben oder mehr Ecken aufweisendes, ebenes, regelmäßiges, einfaches Polygon. Mittels der Ausbildung des Drehkörpers derart, dass er mindestens eine Ecke aufweist, kann auf einfache mechanische Art und Weise ein Drehkörper hergestellt werden, welcher einen Querschnitt mit variierendem Abstand zwischen Drehachse und Drehkörper aufweist. Durch die Ecken findet darüber hinaus noch eine weitere Erhöhung der Reibung zwischen den Kunststoffschnitzeln und dem Drehkörper statt, so dass die mechanische Reinigungskomponente auf diese Weise noch weiter verstärkt werden kann. Durch die Ausgestaltung als Polygon wird weiterhin eine einfache Herstellbarkeit sowie das Vermeiden von Hinterschneidungen erreicht, so dass eine einfache Reinigung der Vorrichtung und eine hohe Betriebssicherheit erreicht werden können.

In einer Variante ist der Drehkörper exzentrisch zur Drehachse angeordnet und sein Querschnitt ist bevorzugt kreisförmig, oval und/oder nockenförmig. Auch auf diese Weise lässt sich ein variierender Abstand zwischen der Drehachse und dem Drehkörper herstellen, welcher zu der periodischen Kompression der Kunststoffschnitzel im Behälter führt. Die abgerundete Ausbildung des Drehkörpers führt dabei zu einer verringerten Abnutzung der Maschinenkomponenten und damit zu einem effizienten Anlagendesign.

Bevorzugt bleibt der Querschnitt des Drehkörpers entlang der Drehachse im Wesentlichen konstant. Auf diese Weise kann eine einfache Ausgestaltung erreicht werden, da komplizierte Formungen des Drehkörpers entfallen. Entsprechend kann der Drehkörper beispielsweise in Form eines Prismas mit einer entsprechenden Grundfläche, welche dem Querschnitt entspricht, bereitgestellt werden.

Um die Ausbildung von Ablagerungen auf dem Drehkörper zu vermeiden, kann ein konischer Übergangsbereich von dem Drehkörper zu einer Antriebswelle der Rührvorrichtung vorgesehen sein, wobei dieser konische Übergangsbereich bevorzugt in einem oberen Bereich der Rührvorrichtung vorgesehen sein kann.

Der Behälter weist einen Querschnitt mit von der Drehachse variierendem Abstand auf. Dabei kann der Querschnitt des Behälters mindestens eine Ecke, bevorzugt mit zwei, drei, vier, fünf, sechs, sieben, acht oder mehr Ecken, aufweisen. In einer besonders bevorzugten Ausbildung umfasst der Querschnitt des Behälters mindestens ein Polygon, bevorzugt ein ebenes, regelmäßiges, einfaches Polygon, besonders bevorzugt ein drei, vier, fünf, sechs, sieben, acht oder mehr Ecken aufweisendes, ebenes, regelmäßiges, einfaches Polygon. Durch die Ausbildung des Behälters mit einem Querschnitt, welcher von der Drehachse variiert, kann erreicht werden, dass die Kunststoffschnitzel keine unerwünschten Bewegungen im Behälter durchführen. Insbesondere kann erreicht werden, dass nicht alle Kunststoffschnitzel gleichzeitig mit der Drehgeschwindigkeit des Drehkörpers umlaufen, sondern sich ein Geschwindigkeitsgradient zur Behälterwand hin ausbildet. Auf diese Weise kann eine im Zeitverlauf veränderliche und bevorzugt periodische Kompression der Kunststoffschnitzel effizient und kontrolliert erreicht werden.

In einer weiteren vorteilhaften Ausprägung weisen der Querschnitt des Behälters und der Querschnitt des Drehkörpers unterschiedliche Anzahlen an Ecken auf, wobei der Drehkörper bevorzugt eine ungerade Anzahl an Ecken und der Behälter eine gerade Anzahl an Ecken, oder der Drehkörper bevorzugt eine gerade Anzahl an Ecken und der Behälter eine ungerade Anzahl an Ecken aufweist. Dadurch, dass der Drehkörper und der Behälter unterschiedliche Eckenanzahlen aufweisen, kann erreicht werden, dass eine umlaufende Kompressions- bzw. Entspannungswelle in den Kunststoffschnitzeln erreicht wird. Besonders wird vermieden, dass an sämtlichen Ecken bzw. sämtlichen Flächen der jeweiligen Polygone gleichzeitig die gleichen Abstände zwischen der Behälterwand und dem Drehkörper erreicht werden, was zu übermäßigen Schwingungen der gesamten Anlage mit der damit notwendig werdenden Dimensionierung des Antriebes führen könnte. Durch das Vorsehen der unterschiedlichen Anzahlen an Ecken wird hingegen ein relativ gleichmäßiger Betrieb der Drehung der Anlage erreicht, so dass die entsprechende Dimensionierung des Antriebes für den Drehkörper effizient ausgeführt werden kann.

In einer bevorzugten Weiterbildung ist an der Rühreinrichtung mindestens ein sich im Wesentlichen senkrecht zu der Drehachse der Rühreinrichtung erstreckender Steg angebracht, welcher zur Bewegung der Kunststoffschnitzel innerhalb des Behälters dient. Bevorzugt ist der Steg so angebracht, dass er symmetrisch bezüglich der Drehachse angeordnet ist und entsprechend an gegenüberliegenden Seiten der Rühreinrichtung bzw. aus dem Drehkörper heraus hervorsteht.

Der Drehkörper der Rühreinrichtung ist bevorzugt so ausgebildet, dass er über die Höhe des Behälters hinweg, bzw. über die gewünschte Füllhöhe des Behälters hinweg, im Wesentlichen einen konstanten Querschnitt aufweist, also die jeweiligen Wände im Wesentlichen parallel zur Drehachse verlaufen.

Die oben gestellte Aufgabe wird auch durch ein Verfahren mit den Merkmalen des Anspruchs 11 gelöst. Vorteilhafte Weiterbildungen ergeben sich aus den abhängigen Ansprüchen.

Entsprechend umfasst das Verfahren zur Reinigung von Kunststoffschnitzeln das Einbringen der Kunststoffschnitzel in einen Behälter, in welchem eine um eine Drehachse drehbar angeordnete Rühreinrichtung zum Rühren der Kunststoffschnitzel vorgesehen ist, wobei die Rühreinrichtung einen sich entlang der Drehachse erstreckenden Drehkörper aufweist, der aus Drehkörperwänden aufgebaut ist, wobei der Drehkörper senkrecht zur Drehachse einen Querschnitt aufweist, der Abstand zwischen der Umfangslinie des Querschnitts des Drehkörpers und der Drehachse entlang der Umfangslinie des Querschnitts des Drehkörpers variiert und durch Drehung des Drehkörpers um die Drehachse eine sich im Zeitverlauf ändernde Kompression auf die Kunststoffschnitzel aufgebracht wird. Auf diese Weise wird eine verbesserte mechanische Reinigungsleistung erreicht.

### Kurze Beschreibungder Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Seitenansicht einer Vorrichtung zur Reinigung von Kunststoffschnitzeln;
- Figur 2: eine schematische Schnittdarstellung durch die in Figur 1 gezeigte Vorrichtung entlang der Schnittlinie A-A in Figur 1;
- Figur 3: eine schematische perspektivische Ansicht der Rühreinrichtung;
- Figur 4: eine schematische Schnittdarstellung durch die Rühreinrichtung der Figur 3;
- Figur 5: eine schematische perspektivische Draufsicht auf die Rühreinrichtung entlang der Drehachse;
- Figur 6: eine schematische Seitenansicht der Rühreinrichtung; und
- Figur 7: eine weitere schematische Seitenansicht der Rühreinrichtung, wobei diese Ansicht gegenüber der in Figur 6 gezeigten Ansicht um 90 Grad gedreht ist.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird teilweise verzichtet, um Redundanzen in der Beschreibung zu reduzieren.

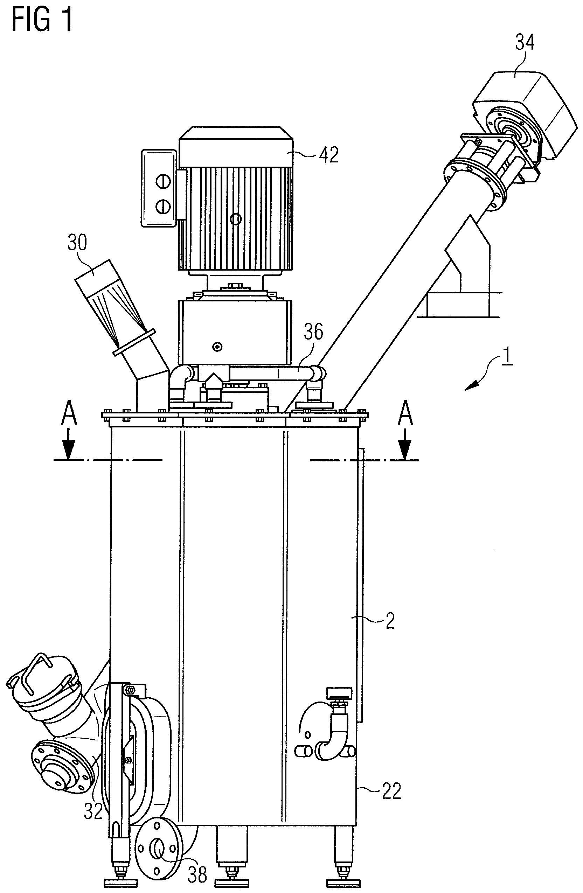

In Figur 1 ist eine Vorrichtung 1 zur Reinigung von Kunststoffschnitzeln gezeigt, wobei die Vorrichtung einen Behälter 2 zur Aufnahme der Kunststoffschnitzel umfasst. Der Behälter 2 weist eine Einfüllöffnung 30 zum Einfüllen der ungereinigten Kunststoffschnitzel in den Behälter 2 auf, mittels welcher die Kunststoffschnitzel an der Oberseite des Behälters 2 eingebracht werden können. Eine Austragvorrichtung 32 ist an der unteren Seite des Behälters 2 vorgesehen, um die gereinigten Kunststoffschnitzel aus dem Behälter 2 austragen zu können. Die Austragvorrichtung 32 weist in bekannter Weise eine Förderschnecke auf, welche über einen entsprechenden Antriebsmotor 34 angetrieben ist.

Wie bereits aus Figur 1 zu erkennen ist, ist der Behälter 2 nicht rund ausgebildet, sondern weist einen eckigen bzw. polygonförmigen Querschnitt mit Ecken 22 auf. In dem in Figur 1 gezeigten Ausführungsbeispiel ist der Querschnitt ein gleichseitiges Achteck, also ein achteckiges, ebenes, gleichseitiges, einfaches Polygon.

Neben dem Eintrag von ungereinigten Kunststoffschnitzeln in den Behälter 2 über die Einfüllöffnung 30 kann auch über die Zufuhr 36 eine Reinigungsflüssigkeit, beispielsweise eine Lauge mit einem 1,5 bis 2 %igen Anteil an OH⁻-Ionen, in den Behälter 2 eingebracht werden. Die Reinigungsflüssigkeit kann dann an der Unterseite des Behälters 2 über einen Abzug 38 wieder abgezogen werden.

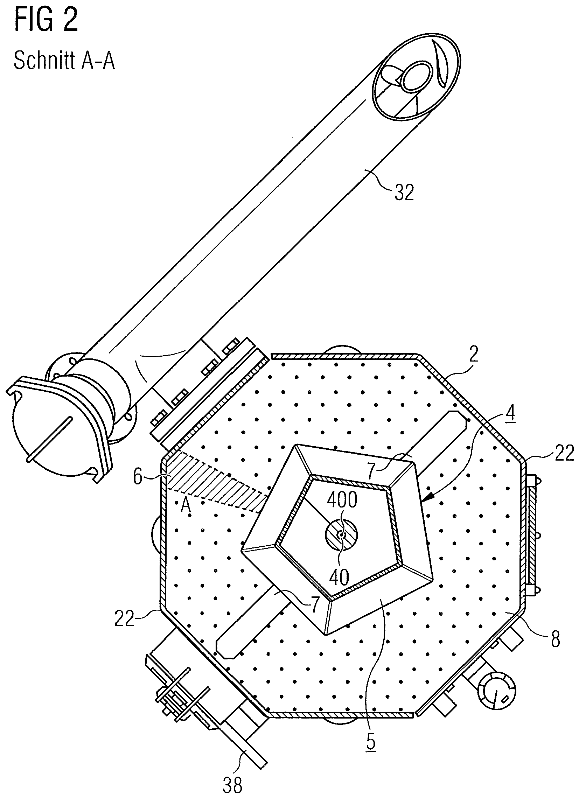

In dem Behälter 2, welcher in Figur 2 entsprechend in dem Querschnitt entlang der Querschnittsebene A-A aus der Figur 1 gezeigt ist, ist eine Rühreinrichtung 4 vorgesehen, welche um eine Drehachse 400 drehbar in dem Behälter 2 angeordnet ist. Die Rühreinrichtung 4 wird dabei über die im Zentrum des Behälters angeordnete Drehwelle 40, welche in Figur 2 gleichzeitig auch die Drehachse 400 ausbildet, angetrieben und gehalten. Die Rühreinrichtung 4 ist über die Drehwelle 40 mit dem in Figur 1 gezeigten Antriebsmotor 42 gekoppelt, welcher die eigentliche Drehbewegung auf die Rühreinrichtung 4 aufbringt.

Die Rühreinrichtung 4 umfasst einen Drehkörper 5, welcher drehfest mit der Drehwelle 40 verbunden ist und welcher entsprechend ebenfalls um die Drehachse 400 drehbar in dem Behälter 2 angeordnet ist. Der Drehkörper 5 weist, wie sich bereits aus der Figur 2 unmittelbar ergibt, ebenfalls einen eckigen Querschnitt auf, insbesondere den Querschnitt eines gleichmäßigen Fünfecks, also eines ebenen, regelmäßigen, einfachen Polygons mit fünf Ecken 58.

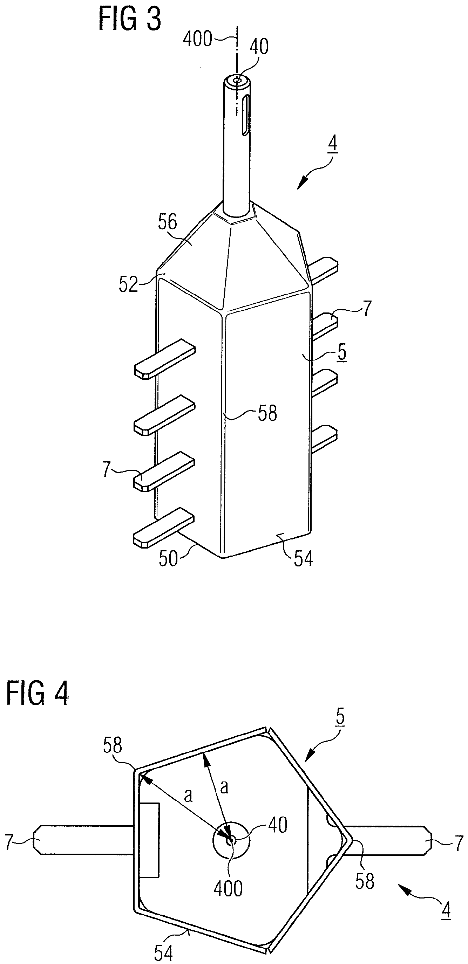

Die Rühreinrichtung 4 ist in Figur 3 noch einmal in einer perspektivischen, schematischen Ansicht gezeigt. Ausgehend von der Drehwelle 40, welche mit dem in Figur 1 gezeigten Motor 42 gekoppelt ist, erstreckt sich der Drehkörper 5 von seinem unteren Ende 50 bis zu seinem oberen Ende 52 mit einem im Wesentlichen konstanten Querschnitt. Mit anderen Worten sind die entsprechenden Wandflächen 54 des Drehkörpers 5 im Wesentlichen parallel zu der Drehachse 400 der Rühreinrichtung 4 angeordnet. Damit handelt es sich bei dem Drehkörper 5 um ein Prisma mit einem Fünfeck als Grundfläche.

Der Drehkörper 5 erstreckt sich zwischen seinem unteren Ende 50 und seinem oberen Ende 52 im Wesentlichen über diejenige Höhe des Behälters 2 hinweg, in welcher die Kunststoffschnitzel eingefüllt bzw. behandelt werden sollen. Im Normalbetrieb ist der Behälter 2 entsprechend ungefähr bis zum oberen Ende 52 des Drehkörpers 5 mit Kunststoffschnitzeln gefüllt.

Oberhalb des oberen Endes 52 des Drehkörpers 5 ist ein im Wesentlichen konischer Übergangsbereich 56 vorgesehen, welcher als Übergang von dem polygonalen Drehkörper 5 zu der Drehwelle 40 vorgesehen ist. Die konische Ausprägung dient dazu, dass Reinigungsflüssigkeit und Kunststoffschnitzel entsprechend ablaufen bzw. abtropfen können und sich keine Ablagerungen auf dem Drehkörper 5 ausbilden können.

Der Querschnitt des Drehkörpers 5 ist beispielsweise auch in Figur 4 zu sehen, aus der sich ergibt, dass die entsprechenden Wandbereiche 54 eine im Wesentlichen parallele Ausrichtung zur Drehachse 400 aufweisen. Aus Figur 4 ergibt sich auch, dass der Querschnitt des Drehkörpers 5 im Wesentlichen als ebenes, regelmäßiges, einfaches Polygon mit fünf Ecken 58 ausgebildet ist und der Drehkörper 5 als Prisma mit einem Fünfeck als Grundfläche ausgebildet ist.

Weiterhin ergibt sich hieraus auch unmittelbar, dass der Abstand a zwischen der Drehachse 400 und dem Drehkörper 5 variiert,. Insbesondere ist bei dem in der Figur 4 gezeigten Fünfeck der Abstand a zwischen der Drehachse 400 und einer Ecke 58 des Fünfecks größer, als zwischen einem Mittelbereich einer Wandfläche 54 des Drehkörpers 5 und der Drehachse 400. Entsprechend variiert hier der Abstand a über den Querschnitt des Drehkörpers 5 hinweg bzw. entlang der Umfangslinie des Drehkörpers 5.

Aus der Figur 2 lässt sich erkennen, dass der Behälter 2 achteckig und der Drehkörper 5 fünfeckig ausgebildet sind. Entsprechend unterscheiden sich die Anzahlen der Ecken 22, 58 des Drehkörpers 5 und des Behälter 2. Dabei hat der Drehkörper 5 eine ungerade Anzahl an Ecken 58 und der Behälter 2 eine gerade Anzahl an Ecken 22.

Aus diesen unterschiedlichen Anzahlen an Ecken ergibt sich, wie beispielsweise aus Figur 2 zu erkennen, dass in einem bestimmten, in Figur 2 exemplarisch schraffiert angegebenen Betrachtungssegment 6, der Abstand A zwischen dem Drehkörper 5 und dem Behälter 2 ständig variiert, sobald der Drehkörper 5 um die Drehachse 400 rotiert. Durch diesen oszillierenden Abstand A zwischen der Oberfläche des Drehkörpers 5 und der Wand des Behälters 2 wird entsprechend auf die sich in diesem Betrachtungssegment 6 befindlichen Kunststoffschnitzel ein periodisch variierender Druck ausgeübt. Entsprechend werden die Kunststoffschnitzel in diesem Betrachtungssegment 6 periodisch komprimiert und entspannt, wodurch eine deutlich erhöhte Reibung der Kunststoffschnitzel untereinander erreicht wird. Diese Betrachtung gilt natürlich für jegliches andere Segment des Volumens des Behälters 2 analog.

An der Rühreinrichtung sind weiterhin Stege 7 angebracht, welche sich senkrecht zu der Drehachse 400 erstrecken, und welche über den Drehkörper 5 hinaus stehen, so dass sie sich in den Behälter 2 hineinerstrecken.

Die Stege 7 sind, wie beispielsweise in Figur 3 gezeigt, bevorzugt in einer zueinander parallelen Reihe von mehreren Stegen 7 übereinander angeordnet, wobei sich die Stege an jeweils gegenüberliegenden Seiten des Drehkörpers 5 befinden. Mittels der Stege 7 werden die sich in dem Behälter 2 befindlichen Kunststoffschnitzel in eine umlaufende Bewegung versetzt, so dass auch auf diese Weise eine starke Reibung zwischen den einzelnen Kunststoffschnitzeln sowie zwischen den Kunststoffschnitzeln und den jeweiligen Oberflächen der Rühreinrichtung 4 bzw. des Behälters 2 hervorgerufen wird. Auf diese Weise ergibt sich eine umlaufende Strömung der Kunststoffschnitzel in dem Behälter 2, welche jedoch aufgrund der Geometrie des Behälters 2 und der entsprechenden Geometrie des Drehkörpers 5 einer periodischen Kompression unterworfen ist.

Der Drehkörper 5 ist aufgrund seiner ungeraden Eckenzahl so ausgeprägt, dass die Stege 7, wenn sie sich an exakt gegenüberliegenden Enden des Drehkörpers 5 erstrecken, unterschiedlich weit über den Drehkörper 5 hinauserstrecken, obwohl sie jeweils einen identischen Radius bezüglich der Drehachse 400 aufweisen. Dies liegt, wie beispielsweise aus Figur 4 zu erkennen, daran, dass ein Steg 7 auf einer flachen Wandseite 54 des Drehkörpers 5 und der exakt gegenüberliegende Steg 7 an einer entsprechenden Ecke 58 des Drehkörpers 5 aus dem Drehkörper 5 heraustritt. Auch auf diese Weise wird eine erhöhte Kompression bzw. Entspannung, und damit eine deutlich erhöhte Reibung der Kunststoffschnitzel innerhalb des Behälters 2, erzeugt.

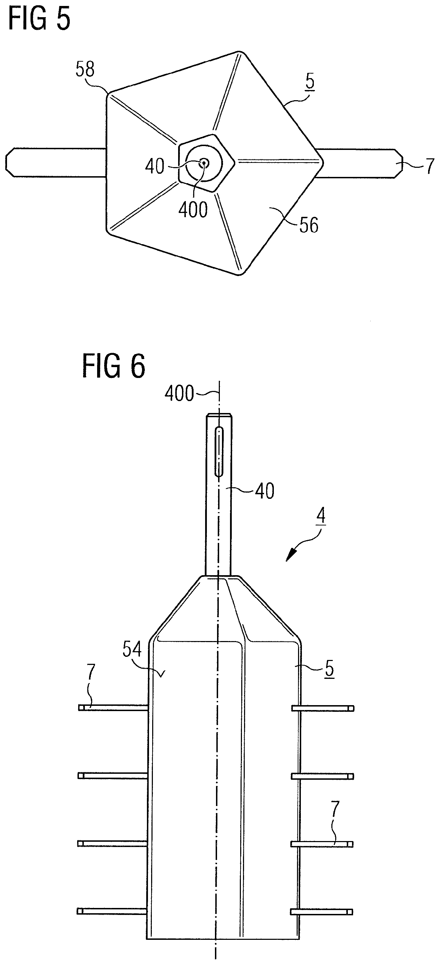

Figur 5 zeigt schematisch eine Draufsicht des konisch zulaufenden Bereiches 56 des Drehkörpers 5. Hier ist zu erkennen, dass die entsprechenden, konisch zulaufenden Oberflächen derart angeschrägt sind, dass sich Kunststoffschnitzel bzw. Flüssigkeiten nicht auf dem Drehkörper 5 halten können.

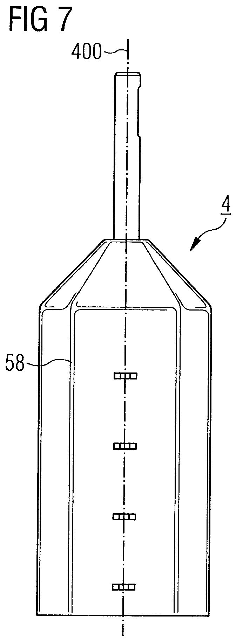

In den Figuren 6 und 7 ist die Rühreinrichtung 4 noch einmal in zwei Seitenansichten gezeigt, wobei die beiden Ansichten jeweils um 90 Grad gegeneinander gedreht sind. Hieraus ergibt sich insbesondere in Figur 4 noch einmal die, je nach Lage, asymmetrische Ausprägung des Drehkörpers 5.

Aus Figur 2 ergibt sich, dass am Boden der Vorrichtung 1 ein Austragsboden 8 vorgesehen ist, wobei dieser Austragsboden 8 in Form eines Siebes, einer durchlöcherten Platte oder eines anderen durchlässigen Gebildes so ausgeprägt ist, dass beispielweise die Reinigungsflüssigkeit, welche zur Reinigung der Kunststoffschnitzel verwendet wird, nach unten hin abgezogen werden kann. Auf diese Weise findet eine Trennung der gereinigten Kunststoffschnitzel und der Reinigungsflüssigkeit mit den von dieser ausgetragenen Schwebstoffen statt.

Auch bei einer Trockenreinigung im Trockenbetrieb ist es vorteilhaft, die auftretenden Stäube nach unten hin mittels eines Luftstroms abzuziehen.

Auf dem Austragsboden 8 selbst werden die Kunststoffschnitzel dann zu der Austragsschnecke 32 gefördert.

Hierbei ist insbesondere ein kontinuierlicher Betrieb der Vorrichtung dadurch möglich, dass, wie in Figur 1 gezeigt, Kunststoffschnitzel über die Einfüllöffnung 30 von oben auf die sich bereits in dem Behälter 2 befindlichen Kunststoffschnitzel aufgefüllt werden und die Verweildauer in der Reinigungsvorrichtung durch eine Regulierung des Austragsvolumens der Austragvorrichtung 32 erreicht wird. Ein individueller Kunststoffschnitzel durchläuft dabei einen quasi spiralförmigen Pfad von der Oberseite des Behälters 2 bis hin zur Austragsschnecke 32, wobei auf diese Weise die Verweildauer in der Vorrichtung 1 eingestellt werden kann.

Bei der in den Figuren gezeigten Reinigungsvorrichtung 1 wird durch den mit dem variierenden Querschnitt versehenen Drehkörper 5 eine entsprechende Oszillation des Druckes auf die jeweiligen Kunststoffschnitzel innerhalb des Behälters 2 erzeugt.

Der Behälter 2 muss dabei nicht zwangsläufig ebenfalls eine eckige Struktur aufweisen, sondern kann auch rund ausgebildet sein, wobei sich durch die Reibung der Kunststoffschnitzel an der Wand des Behälters 2 dann dennoch ein Geschwindigkeitsgradient der Kunststoffschnitzel beim Umlauf derart einstellt, dass sowohl eine periodische Druckwelle die einzelnen Kunststoffschnitzel durchläuft, als auch ein steter Umwälzungsprozess erreicht wird. Die Ausgestaltung als eckiger Behälter 2 ist aber zumindest dahingehend vorteilhaft, dass ungewollte Bewegungen der Kunststoffschnitzel auf diese Weise vermieden werden können und entsprechend eine kontrollierte Prozessführung ermöglicht wird.

Es wurde auch in Erwägung gezogen, die Anzahl der Ecken 22, 58 des Behälters 2 sowie des Drehkörpers 5 gleich zu gestalten, wobei in diesem Fall durch das Aufbringen erhöhter Anlagenschwingungen die Reinigungswirkung positiv beeinflusst werden könnte.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Vorrichtung zur Reinigung von Kunststoffschnitzeln
- 2: Behälter
- 22: Ecke des Behälters
- 30: Einfüllöffnung für Kunststoffschnitzel
- 32: Austragvorrichtung
- 34: Antriebsmotor für Austragvorrichtung
- 36: Zufuhr für Reinigungsflüssigkeit
- 38: Abzug von Reinigungsflüssigkeit
- 4: Rühreinrichtung
- 40: Drehwelle
- 400: Drehachse
- 42: Antriebsmotor für Rühreinrichtung
- 5: Drehkörper
- 50: unteres Ende des Drehkörpers
- 52: oberes Ende des Drehkörpers
- 54: Wandfläche des Drehkörpers
- 56: konischer Übergangsbereich
- 58: Ecke des Drehkörpers
- 6: Betrachtungssegment
- 7: Steg
- 8: Austragsboden
- A: variierender Abstand zwischen Behälter und Drehkörper
- a: variierender Abstand zwischen Drehachse und Drehkörper

## Patentansprüche

1. Vorrichtung (1) zur Reinigung von Kunststoffschnitzeln, umfassend einen Behälter (2) zur Aufnahme der Kunststoffschnitzel und eine in dem Behälter um eine Drehachse (400) drehbar angeordnete Rühreinrichtung (4) zum Rühren der Kunststoffschnitzel, wobei die Rühreinrichtung (4) einen sich entlang der Drehachse (400) erstreckenden Drehkörper (5) aufweist, der aus Drehkörperwänden aufgebaut ist, wobei
der Drehkörper (5) senkrecht zur Drehachse (400) einen Querschnitt aufweist, der Abstand zwischen der Umfangslinie des Querschnitts des Drehkörpers (5) und der Drehachse (400) entlang der Umfangslinie des Querschnitts des Drehkörpers (5) variiert, der Behälter (2) senkrecht zur Drehachse (400) einen Querschnitt aufweist und der Abstand zwischen der Umfangslinie des Querschnitts des Behälters (2) und der Drehachse (400) entlang der Umfangslinie des Querschnitts des Behälters (2) variiert.

2. Vorrichtung gemäß Anspruch 1, **dadurch gekennzeichnet, dass** der Querschnitt des Drehkörpers (5) mindestens eine Ecke (58), bevorzugt zwei, drei, vier, fünf, sechs, sieben oder acht Ecken, aufweist.

3. Vorrichtung gemäß Anspruch 1 oder 2, **dadurch gekennzeichnet, dass** der Querschnitt des Drehkörpers (5) ein Polygon umfasst, bevorzugt ein ebenes, regelmäßiges, einfaches Polygon, besonders bevorzugt ein drei, vier, fünf, sechs, sieben oder mehr Ecken (58) aufweisendes, ebenes, regelmäßiges, einfaches Polygon.

4. Vorrichtung gemäß Anspruch 1, **dadurch gekennzeichnet, dass** der Drehkörper (5) exzentrisch zur Drehachse (400) angeordnet ist und der Querschnitt bevorzugt kreisförmig, oval und/oder nockenförmig ist.

5. Vorrichtung gemäß einem der vorstehenden Ansprüche, **dadurch gekennzeichnet, dass** der Querschnitt des Drehkörpers (5) entlang der Drehachse (400) konstant ist.

6. Vorrichtung gemäß einem der vorstehenden Ansprüche, **dadurch gekennzeichnet, dass** ein im Wesentlichen konischer Übergangsbereich (56) von dem Drehkörper (5) zu einer Antriebswelle (40) der Rührvorrichtung (4) vorgesehen ist, bevorzugt in einem oberen Bereich der Rührvorrichtung (4).

7. Vorrichtung gemäß einem der vorhergehenden Ansprüche, **dadurch gekennzeichnet, dass** der Querschnitt des Behälters (2) mindestens eine Ecke (22), bevorzugt zwei, drei, vier, fünf, sechs, sieben, acht oder mehr Ecken, aufweist.

8. Vorrichtung gemäß einem der vorhergehenden Ansprüche, **dadurch gekennzeichnet, dass** der Querschnitt des Behälters (2) mindestens ein Polygon umfasst, bevorzugt ein ebenes, regelmäßiges, einfaches Polygon, besonders bevorzugt ein drei, vier, fünf, sechs, sieben oder acht Ecken (22) aufweisendes, ebenes, regelmäßiges, einfaches Polygon.

9. Vorrichtung gemäß Anspruch 7 oder 8, **dadurch gekennzeichnet, dass** der Querschnitt des Behälters (2) und der Querschnitt des Drehkörpers (5) unterschiedliche Anzahlen an Ecken (22, 58) aufweisen, wobei der Drehkörper (5) bevorzugt eine ungerade Anzahl an Ecken (58) und der Behälter (2) eine gerade Anzahl an Ecken (22), oder der Drehkörper (5) bevorzugt eine gerade Anzahl an Ecken (58) und der Behälter (2) eine ungerade Anzahl an Ecken (22) aufweist.

10. Vorrichtung gemäß einem der vorstehenden Ansprüche, **dadurch gekennzeichnet, dass** aus dem Drehkörper (5) mindestens ein Steg (7) zum Fördern der Kunststoffschnitzel in den Behälter (2) hinein ragt.

11. Verfahren zur Reinigung von Kunststoffschnitzeln, umfassend das Einbringen der Kunststoffschnitzel in einen Behälter (2), in welchem eine um eine Drehachse (400) drehbar angeordnete Rühreinrichtung (4) zum Rühren der Kunststoffschnitzel vorgesehen ist, wobei die Rühreinrichtung (4) einen sich entlang der Drehachse (400) erstreckenden Drehkörper (5) aufweist, der aus Drehkörperwänden aufgebaut ist, wobei der Drehkörper (5) senkrecht zur Drehachse (400) einen Querschnitt aufweist, der Abstand zwischen der Umfangslinie des Querschnitts des Drehkörpers (5) und der Drehachse (400) entlang der Umfangslinie des Querschnitts des Drehkörpers (5) variiert und durch Drehung des Drehkörpers (5) um die Drehachse (400) eine sich im Zeitverlauf ändernde Kompression auf die Kunststoffschnitzel aufgebracht wird.

12. Verfahren gemäß Anspruch 11, **dadurch gekennzeichnet, dass** durch die Drehung des Drehkörpers (5) um die Drehachse (400) eine periodische Kompression auf die Kunststoffschnitzel aufgebracht wird.

13. Verfahren gemäß Anspruch 11 oder 12, **dadurch gekennzeichnet, dass** die Kunststoffschnitzel in eine Vorrichtung (1) nach einem der der Ansprüche 1 bis 10 eingebracht werden.

## Claims

1. Device (1) for cleaning plastic chips, comprising a container (2) for the reception of the plastic chips and a stirring device (4) rotatably arranged about a rotational axis (400) in the container for stirring the plastic chips, wherein the stirring device (4) has a rotational body (5) that extends along the rotational axis (400), which is composed of rotational body walls, wherein
the rotational body (5) has a cross section perpendicular to the rotational axis (400), the distance between the circumferential line of the cross section of the rotational body (5) and the rotational axis (400) varies along the circumferential line of the cross section of the rotational body (5), the container (2) has a cross section perpendicular to the rotational axis (400) and the distance between the circumferential line of the cross section of the container (2) and the rotational axis (400) varies along the circumferential line of the cross section of the container (2).

2. Device according to Claim 1, **characterised in that** the cross section of the rotational body (5) has at least one corner (58), preferably two, three, four, five, six, seven or eight corners.

3. Device according to Claim 1 or 2, **characterised in that** the cross section of the rotational body (5) comprises a polygon, preferably a planar, regular, simple polygon, particularly preferred a planar, regular, simple polygon having three, four, five, six, seven or more corners (58).

4. Device according to Claim 1, **characterised in that** the rotational body (5) is arranged eccentrically to the rotational axis (400) and the cross section is preferably circular, oval and/or cam type.

5. Device according to any one of the preceding claims, **characterised in that** the cross section of the rotational body (5) along the rotational axis (400) is constant.

6. Device according to any one of the preceding claims, **characterised in that** a substantially conical intermediate region (56) from the rotational body (5) to a drive shaft (40) of the stirring device (4) is provided, preferably in an upper region of the stirring device (4).

7. Device according to any one of the preceding claims, **characterised in that** the cross section of the container (2) has at least one corner (22), preferably two, three, four, five, six, seven, eight or more corners.

8. Device according to any one of the preceding claims, **characterised in that** the cross section of the container (2) comprises at least one polygon, preferably a planar, regular, simple polygon, particularly preferred a planar, regular, simple polygon having three, four, five, six, seven or eight corners (22).

9. Device according to Claim 7 or 8, **characterised in that** the cross section of the container (2) and the cross section of the rotational body (5) have different numbers of corners (22, 58), wherein the rotational body (5) preferably has an odd number of corners (58) and the container (2) has an even number of corners (22), or the rotational body (5) preferably has an even number of corners (58) and the container (2) has an odd number of corners (22).

10. Device according to any one of the preceding claims, **characterised in that** at least one crossbar (7) for conveying the plastic chips extends from the rotational body (5) into the container (2).

11. Method for cleaning plastic chips, comprising introducing the plastic chips into a container (2), in which a stirring device (4) rotatably arranged about a rotational axis (400) for stirring the plastic chips is provided, wherein the stirring device (4) has a rotational body (5) that extends along the rotational axis (400) which is composed of rotational body walls, wherein
the rotational body (5) has a cross section perpendicular to the rotational axis (400), the distance between the circumferential line of the cross section of the rotational body (5) and the rotational axis (400) varies along the circumferential line of the cross section of the rotational body (5) and by rotating the rotational body (5) about the rotational axis (400) a time-varying compression is applied to the plastic chips.

12. Method according to Claim 11, **characterised in that** by rotating the rotational body (5) about the rotational axis (400) a periodic compression is applied to the plastic chips.

13. Method according to Claim 11 or 12, **characterised in that** the plastic chips are introduced into a device (1) according to any one of Claims 1 to 10.

## Revendications

1. Dispositif (1) pour nettoyer des copeaux de plastique, comprenant un récipient (2) pour recevoir des copeaux de plastique et un dispositif mélangeur (4) agencé de manière à pouvoir tourner autour d'un axe de rotation (400) dans le récipient pour remuer les copeaux de plastique, le dispositif mélangeur (4) comportant un corps rotatif (5) qui s'étend le long de l'axe de rotation (400) et qui est constitué de parois de corps rotatif,
dans lequel le corps rotatif (5) comporte une section transversale perpendiculairement à l'axe de rotation (400), la distance entre la ligne circonférentielle de la section transversale du corps rotatif (5) et l'axe de rotation (400) varie le long de la ligne circonférentielle de la section transversale du corps rotatif (5), le récipient (2) comporte une section transversale perpendiculairement à l'axe de rotation (400) et la distance entre la ligne circonférentielle de la section transversale du récipient (2) et l'axe de rotation (400) varie le long de la ligne circonférentielle de la section transversale du récipient (2).

2. Dispositif selon la revendication 1, **caractérisé en ce que** la section transversale du corps rotatif (5) comporte au moins un angle (58), de préférence deux, trois, quatre, cinq, six, sept ou huit angles.

3. Dispositif selon la revendication 1 ou 2, **caractérisé en ce que** la section transversale du corps rotatif (5) comprend un polygone, de préférence un polygone simple, régulier, plan, et de préférence un polygone simple, régulier, plan, comportant trois, quatre, cinq, six, sept angles ou plus (58).

4. Dispositif selon la revendication 1, **caractérisé en ce que** le corps rotatif (5) est agencé de façon excentrique par rapport à l'axe de rotation (400) et la section transversale est de préférence en forme de cercle, ovale et/ou en forme de came.

5. Dispositif selon l'une des revendications précédentes, **caractérisé en ce que** la section transversale du corps rotatif (5) est constante le long de l'axe de rotation (400).

6. Dispositif selon l'une des revendications précédentes, **caractérisé en ce qu'**il est prévu une zone de transition (56) sensiblement conique allant du corps rotatif (5) à un arbre moteur (40) du dispositif mélangeur (4), de préférence dans une zone supérieure du dispositif mélangeur (4).

7. Dispositif selon l'une des revendications précédentes, **caractérisé en ce que** la section transversale du récipient (2) comporte au moins un angle (22), de préférence deux, trois, quatre, cinq, six, sept, huit angles ou plus.

8. Dispositif selon l'une des revendications précédentes, **caractérisé en ce que** la section transversale du récipient (2) comprend au moins un polygone, de préférence un polygone simple, régulier, plan, et de préférence un polygone simple, régulier, plan, comportant trois, quatre, cinq, six, sept ou huit angles (22).

9. Dispositif selon la revendication 7 ou 8, **caractérisé en ce que** la section transversale du récipient (2) et la section transversale du corps rotatif (5) ont des nombres différents d'angles (22, 58), le corps rotatif (5) ayant de préférence un nombre impair d'angles (58) et le récipient (2) un nombre pair d'angles (22) ou le corps rotatif (5) ayant de préférence un nombre pair d'angles (58) et le récipient (2) un nombre impair d'angles (22).

10. Dispositif selon l'une des revendications précédentes, **caractérisé en ce qu'**au moins une traverse (7) dépasse du corps rotatif (5) dans le récipient (2) pour transporter les copeaux de plastique.

11. Procédé de nettoyage de copeaux de plastique, comprenant l'amenée des copeaux de plastique dans un récipient (2), dans lequel un dispositif mélangeur (4) agencé de manière à pouvoir tourner autour d'un axe de rotation (400), est prévu pour remuer les copeaux de plastique, le dispositif mélangeur (4) comportant un corps rotatif (5) qui s'étend le long de l'axe de rotation (400) et qui est constitué de parois de corps rotatif,
le corps rotatif (5) comportant une section transversale perpendiculairement à l'axe de rotation (400), la distance entre la ligne circonférentielle de la section transversale du corps rotatif (5) et l'axe de rotation (400) variant le long de la ligne circonférentielle de la section transversale du corps rotatif (5) et une compression variable dans le temps étant exercée sur les copeaux de plastique par la rotation du corps rotatif (5) autour de l'axe de rotation (400).

12. Procédé selon la revendication 11, **caractérisé en ce qu'**une compression périodique est exercée sur les copeaux de plastique par la rotation du corps rotatif (5) autour de l'axe de rotation (400).

13. Procédé selon la revendication 11 ou 12, **caractérisé en ce que** les copeaux de plastique sont placés dans un dispositif (1) selon l'une des revendications 1 à 10.
